Europäisches Patentamt

European Patent Office

Office européen des brevets

(19)

(11) Veröffentlichungsnummer: **0 071 992**
A1

(12) **EUROPÄISCHE PATENTANMELDUNG**

(21) Anmeldenummer: 82107105.7

(22) Anmeldetag: 06.08.82

(51) Int. Cl.³: **E 04 B 1/94,** E 04 B 2/86,
B 23 B 45/00, B 28 D 7/02,
B 29 C 17/10

(30) Priorität: 11.08.81 CH 5147/81

(43) Veröffentlichungstag der Anmeldung: 16.02.83
Patentblatt 83/7

(84) Benannte Vertragsstaaten: AT CH DE FR GB IT LI

(71) Anmelder: IPM-Vertrieb GmbH, Vorstadt 18,
CH-8200 Schaffhausen (CH)

(72) Erfinder: Kindermann, Karlheinz-Bernhard, Vorstadt 18,
CH-8200 Schaffhausen (CH)

(74) Vertreter: Patentanwälte Dipl.-Ing. Westphal Dr. rer. nat.
Bernd Mussgnug Dr. rer.nat. Otto Buchner,
Seb.-Kneipp-Strasse 14, D-7730 VS-Villingen (DE)

(54) Bauelement aus geschäumtem Polystyrol und Gerät zur Bearbeitung desselben.

(57) Bauelement (10') aus geschäumtem Polystyrol, insbesondere verlorenes Beton-Schalungselement, mit einem
die Schaumstoffperlen durchgehend überziehenden und/
oder in Hohlräume (32) des Bauelements (10') eingebrachten Brandschutzmittel, das im Brandfalle die Ausdehnung des Brandes durch das Bauelement hindurch
wirksam verhindert.

Das Brandschutzmittel ist in Bohrungen (32) angeordnet, die in die zwei parallele Wandungen (12', 14')
des Schalungselements (10') verbindenden Stege (24')
gebohrt sind. Ein Gerät zur Herstellung dieser Bohrungen (32) weist ein auf die Aussenseite des Schalungselements (10') aufsetzbares Rohr (34) und einen motorisch getriebenen, im Inneren des Rohrs (34) drehbar
und axial verschiebbar gelagerten Fräsbohrer (40, 46) sowie eine Absaugeinrichtung (56, 58, 60) für das Fräsgut
auf.

Dipl. Ing. Klaus Westphal

Dr. rer. nat. Bernd Mussgnug

Dr. rer. nat. Otto Buchner

PATENTANWÄLTE

Seb.-Kneipp-Strasse 14

D-7730 VS-VILLINGEN

Flossmannstrasse 30 a

D-8000 MÜNCHEN 60

Telefon 07721 - 55343
Telegr. Westbuch Villingen
Telex 15 93 77 webu d

Telefon 089 - 832446
Telegr. Westbuch München
Telex 5213177 webu d

0071992

- 1 -

U.Z.: 763.7

IPM-Vertrieb GmbH
Vorstadt 18
CH - 8200 Schaffhausen

## BAUELEMENT AUS GESCHÄUMTEM POLYSTYROL UND GERÄT ZUR BEARBEITUNG DESSELBEN

Die Erfindung betrifft ein Bauelement aus geschäumtem Polystyrol, wie eine Bauplatte, eine Verkleidungsplatte oder insbesondere ein verlorenes Schalungselement, dessen Hohlräume mit Beton ausgegossen sind.

Zwar werden solche Bauelemente bereits in schwer entflammbarer Qualität hergestellt. Dies reicht jedoch in vielen Fällen nicht aus, um die Ausdehnung eines Brandes durch das Bauelement hindurch sicher zu verhindern.

Durch die Erfindung soll ein Bauelement aus geschäumtem Polystyrol geschaffen werden, das sehr gut feuerhemmend ist.

Diese Aufgabe wird erfindungsgemäß dadurch gelöst, daß das Bauelement ein die Schaumstoffperlen durchgehend überziehendes und/oder in Hohlräumen des Bauelements eingebrachtes Brandschutzmittel enthält.

Unter Brandschutzmittel wird im Sinne der vorliegenden Erfindung jedes feuerhemmende, löschende und isolierende Mittel verstanden. Es kann beispielsweise gleichzeitig mit dem Schäumen des Polystyrols auf die Kunststoffperlen aufgebracht oder nachträglich in Hohlräume des Bauelements eingebracht werden. Beispiele für erfindungsgemäß verwendbare Brandschutzmittel sind zerkleinertes und gebIähtes Perlit-Gestein und Vermiculit, Steinwolle, insbesondere Basaltwolle, mit oder ohne hitzebeständiges Bindemittel, sowie praktisch alle bekannten festen, pulverförmigen oder flüssigen Löschmittel. Insbesondere sind als Brandschutzmittel vorteilhaft anwendbar flüssiges $CCl_4$, $CO_2$-Löschmittel, fluorischer Kohlenwasserstoff, $CO_2$ in Verbindung mit polymerem Tetrafluoräthylen (Halon) und wasserhaltiges Natriumsilikat. Vorteilhaft sind auch sogenannte Dämmschutzbildner verwendbar, die bei Hitzeeinwirkung schon bei verhältnismäßig niedrigen Temperaturen aufschäumen und sich dadurch ausdehnen und eine Dämmschicht bilden. Auch das Einbringen von Brandschutzmörtel in dafür vorgesehene Ausnehmungen ist zweckmäßig. Das pulverförmige oder flüssige Brandschutzmittel kann auch als Bindemittel in keramisches oder faseriges Material eingebracht sein. Sofern das Brandschutzmittel pulverförmig oder flüssig ist, wird es zweckmäßigerweise in Beuteln in die Hohlräume des Bauelements eingebracht, so daß es sich erst im Brandfalle ausdehnt oder verteilt und zur Wirkung kommt.

Besonders bevorzugt wird eine Ausführungsform des erfindungsgemäßen Bauelements, welches als Beton-Schalungselement mit zwei parallele Wandungen verbindenden Stegen ausgebildet ist. Bei dieser bevorzugten Ausführungsform wird das Brandschutzmittel in Ausnehmungen der Stege eingebracht. Diese

- 3 -                                    0071992

Ausnehmungen können sowohl Teile der Hohlräume des Bauelements selbst sein oder es können zur besseren Verankerung
in den Wandungen der Hohlräume besondere Ausnehmungen zur
Verankerung und vollständigen oder teilweisen Aufnahme des
Brandschutzmittels vorgesehen werden.

In weiterer Ausgestaltung der Erfindung kann bei der bevorzugten Ausführungsform das Brandschutzmittel in Axialbohrungen der Stege angeordnet werden, die eine der
parallelen Wandungen durchsetzen. Diese Axialbohrungen
können bequem nach dem Aufschäumen und Formen des Polystyrols
und eventuell Ausgießen mit Beton mechanisch hergestellt und
sodann mit dem Brandschutzmittel gefüllt werden.

Zur Herstellung dieser bevorzugten Ausführungsform schlägt
die Erfindung ferner ein Gerät zum Anbringen der Axialbohrungen in den Stegen vor, welches bei seiner einfachsten
Ausführungsform durch ein an die Außenseite der einen
Wandung stirnseitig ansetzbares Rohr gekennzeichnet ist,
in welchem ein durch einen Elektromotor angetriebener Fräsbohrer drehbar und axial verschiebbar gelagert ist. Durch
axiales Verschieben des durch den Elektromotor in Drehung
versetzten Fräsbohrers können so in sehr bequemer Weise
die Axialbohrungen in den Stegen hergestellt und anschließend
mit dem Brandschutzmittel gefüllt werden.

Da beim Bohren der Axialbohrungen zerkleinertes Abfallmaterial entsteht, das schwer abzuführen und aufzusammeln
ist, weist in vorteilhafter Weiterbildung das Gerät einen
am Rohr angebrachten Absaugstutzen auf, der über einen
Schlauch mit einem in einen Fräsgutbehälter fördernden
Absauggebläse verbunden ist.

0071992

Zweckmäßigerweise kann der Fräsbohrer eine Frässcheibe aufweisen, die an einer mit dem Elektromotor verbundenen Bohrwelle sitzt, und es kann die Bohrwelle aus dem geschlossenen
rückwärtigen Ende des Rohrs nach außen geführt sein und
außerhalb des Rohrs einen die axiale Verschiebung der Bohrwelle im Rohr durch Anlage am geschlossenen Rohrende begrenzenden Anschlag tragen. Dadurch ist die richtige Eindringtiefe des Bohrers in den jeweiligen Steg des Bauelements selbsttätig festgelegt.

Um sicherzustellen, daß die Bohrung genau achsparallel in
dem jeweiligen Steg angeordnet ist, kann das Rohr an seinem
vorderen Ende wenigstens drei radial von seiner Außenfläche
abstehende Flügel tragen, deren Vorderkanten bündig in
einer gemeinsamen Ebene senkrecht zur Rohrachse liegen,
wobei das Rohr nicht über diese Ebene vorsteht. Durch Anlegen der Flügel an die Außenseite der einen Wandung des
Bauelements wird somit eine genau achsparallele Führung
des Fräsbohrers gewährleistet.

Um eine einwandfreie Abführung des aus der Bohrung entfernten
Fräsgutes durch den Absaugstutzen und den anschließenden
Schlauch zu gewährleisten, ist das Rohr in weiterer Ausgestaltung der Erfindung von einer Anzahl von Luftansaugöffnungen durchsetzt. Dadurch ergibt sich ein unbehinderter
Luftstrom durch das Rohr, den Absaugstutzen und den Schlauch
zum Absauggebläse, der das ausgefräste Fräsgut zum Fräsgutbehälter mitführt.

Bei einer bevorzugten Ausführungsform ist der Fräsgutbehälter
durch einen Deckel verschließbar, auf dessen Außenseite das
Absauggebläse fest montiert ist, der an seinem Rand eine
Klemmeinrichtung für einen dem Inneren des Fräsgutbehälters
anliegenden Kunststoffsack aufweist und der mit seiner Außen-

0071992

seite sowohl nach außen als auch nach innen weisend auf den
Fräsgutbehälter aufsetzbar ist, wobei der Fräsgutbehälter
zur Aufnahme des Absauggebläses, des Schlauches, des Elektromotors und des Rohrs geeignet ist. Für den Transport enthält
daher der Fräsgutbehälter mit dem umgekehrt aufgesetzten
Deckel praktisch das gesamte Gerät zur Herstellung der
Axialbohrungen, wobei an der Baustelle lediglich das Rohr
mit dem Elektromotor und dem Schlauch aus dem Fräsgutbehälter
herausgenommen und der Deckel in umgekehrter Lage dicht aufgesetzt werden muß,so daß dann das Absauggebläse auf seiner
Außenseite sitzt und nach innen fördert.

Anhand der Figuren werden Ausführungsbeispiele der Erfindung
näher erläutert. Es zeigt:

Fig. 1   eine Seitenansicht eines erfindungsgemäßen Bauelements,
         das als verlorenes Beton-Schalungselement aus Polystyrol ausgebildet ist,

Fig. 2   eine Seitenansicht der in Figur 1 dargestellten Ausführungsform, die gegenüber Figur 1 um 90 Grad um die
         Längsachse des Bauteils verdreht ist,

Fig. 3   eine der Figur 1 entsprechende Seitenansicht einer
         zweiten Ausführungsform des erfindungsgemäßen Bauelements,

Fig. 4   einen Schnitt längs der Linie IV-IV in Figur 5
         durch eine dritte Ausführungsform des erfindungsgemäßen Bauelements,

Fig. 5   eine schematische Ansicht der dritten Ausführungsform des Bauelements mit dem erfindungsgemäßen Gerät
         zum Bohren von Axialbohrungen in die Stege des Bauelements bei Betrieb des Geräts
         und

0071992

Fig. 6    einen schematischen Längsschnitt durch den das Rohr
          und den Fräsbohrer umfassenden Teil des in Fig. 5
          gezeigten Geräts.

In allen Figuren tragen gleiche oder gleichartige Teile die
gleichen Bezugszeichen.

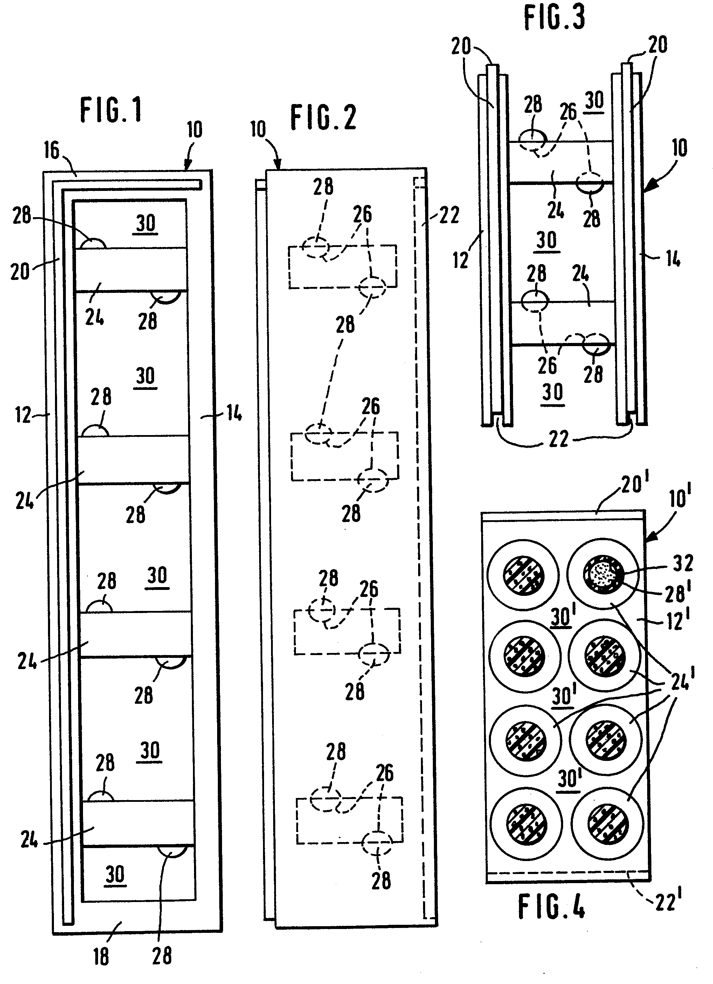

Das in den Figuren 1 und 2 dargestellte, allgemein mit 10 bezeichnete Schalungselement weist zwei parallele Wandungen 12
und 14 sowie je eine die parallelen Wandungen 12 und 14 verbindende Deckwand 16 und Bodenwand 18 auf. An der vorderen
Stirnseite der einen parallelen Wandung 12 und der Deckwandung 16    sind  Vorsprünge    20 vorgesehen, die
sich in entsprechende Einziehungen 22 an der rückwärtigen
Stirnseite eines beim Zusammenfügen anschließenden gleichartigen Bauteils zur besseren Halterung einfügen lassen. Die
beiden parallelen Wandungen 12 und 14 sind durch eine Mehrzahl von Stegen 24 miteinander verbunden, die bei der
dargestellten Ausführungsform etwa rechteckigen Querschnitt
besitzen. Sie können zur besseren Ausformung bei der Herstellung jedoch auch einen sich von vorne nach hinten verjüngenden Querschnitt besitzen. In flachen Ausnehmungen 26
jedes Steges 24 sind an gegenüberliegenden Stellen und in
Richtung von vorne nach hinten gegeneinander versetzt
flache Ausnehmungen 26 vorgesehen, in denen jeweils ein
festes oder in einem durch Hitze schmelzbaren Beutel eingeschlossenes pulverförmiges oder flüssiges Brandschutzmittel 28 verankert ist, das über die Außenfläche der
Stege 24 vorsteht.

Die zwischen den Wandungen 12, 14, 16, 18 gelegenen Hohlräume 30 des Schalungselements 10 werden bei Verwendung mit
Beton ausgegossen. Im Brandfalle stellen daher die Stege 24
aus Polystyrol eine Gefahrenquelle dar, da sie ein übergreifen des Brandes von einer der parallelen Wandungen 12, 14 zur anderen nicht verhindern können. Das in die Ausnehmungen 26 eingebrachte Brandschutzmittel 28 dehnt sich jedoch bei starker Erhitzung so aus, daß es sich über den ganzen Querschnitt der Stege verteilt und dadurch eine brandhemmende und/oder löschende Wirkung ausübt. Somit ist ein längeres Standhalten des Bauelements gegen ein Überspringen des Brandes von einer Wandung 12, 14 zur anderen gewährleistet.

Figur 3 zeigt eine Ausführungsform, die der in den Figuren 1 und 2 gezeigten ähnlich ist. Es fehlen hier jedoch die Deckwand 16 und die Bodenwand 18 und die Vorsprünge 20 sind hier an Oberseite und Vorderseite des Bauelements vorgesehen, während die Einziehungen 22 zum Einfügen der Vorsprünge 20 anschließender Bauelemente an Unterseite und Rückseite des Bauelements vorgesehen sind. Im übrigen ist die Funktionsweise und die Anordnung des Brandschutzmittels 28 die gleiche wie beim Ausführungsbeispiel gemäß Figuren 1 und 2.

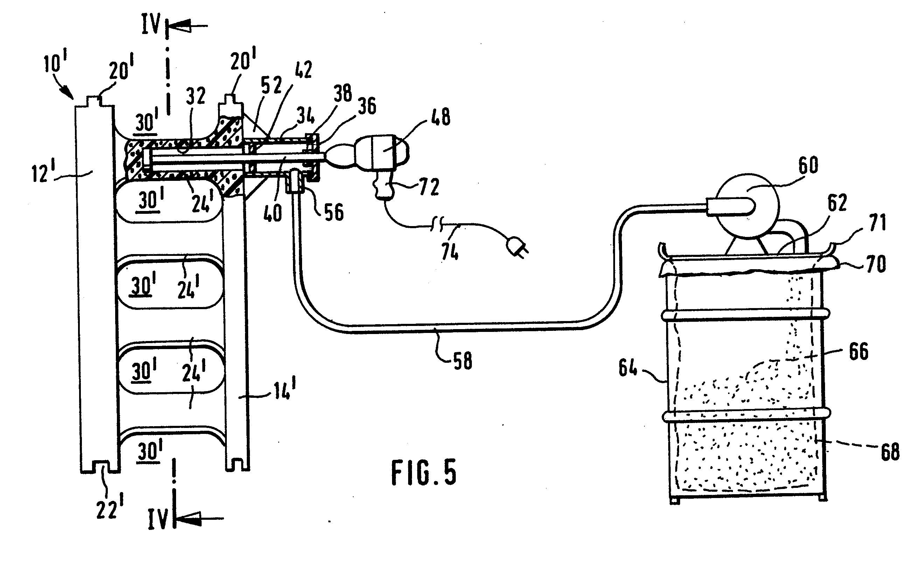

Ein bevorzugtes Ausführungsbeispiel des ebenfalls als Beton-Schalungselement aus Polystyrol ausgebildeten erfindungsgemäßen Bauelements ist in den Figuren 4 und 5 allgemein mit 10' bezeichnet. Auch bei dieser Ausführungsform ist eine vordere Wandung 12' und eine dazu parallele rückwärtige Wandung 14' vorgesehen, welche durch Stege 24' miteinander verbunden sind. Bei dieser Ausführungsform ist die vordere Wandung 12' stärker ausgebildet als die rückwärtige Wandung 14'. Bei dieser Ausführungsform sind Vorsprünge 20' längs der oberen Stirnseite und Einziehungen 22' längs der unteren Stirnseite des Bauelements vorgesehen. Die Stege 24' weisen bei dieser Ausführungsform kreisrunde Querschnitte auf, die sich zu den parallelen Wänden 12' und 14' hin

0071992

verbreitern und abgerundet in die Innenflächen der Wandungen
12' und 14' übergehen. Zwischen den Stegen 24', die gleichmäßig über die Flächen der parallelen Wandungen 12' und
14' verteilt sind, sind mit Beton auszugießende Zwischenräume 30' gebildet.

Senkrecht zu den Wandungen 12' und 14' werden von der Außenseite der rückwärtigen Wandung 14' her Bohrungen 32 ausgefräst, die mit Brandschutzmittel 28' ausgefüllt werden.

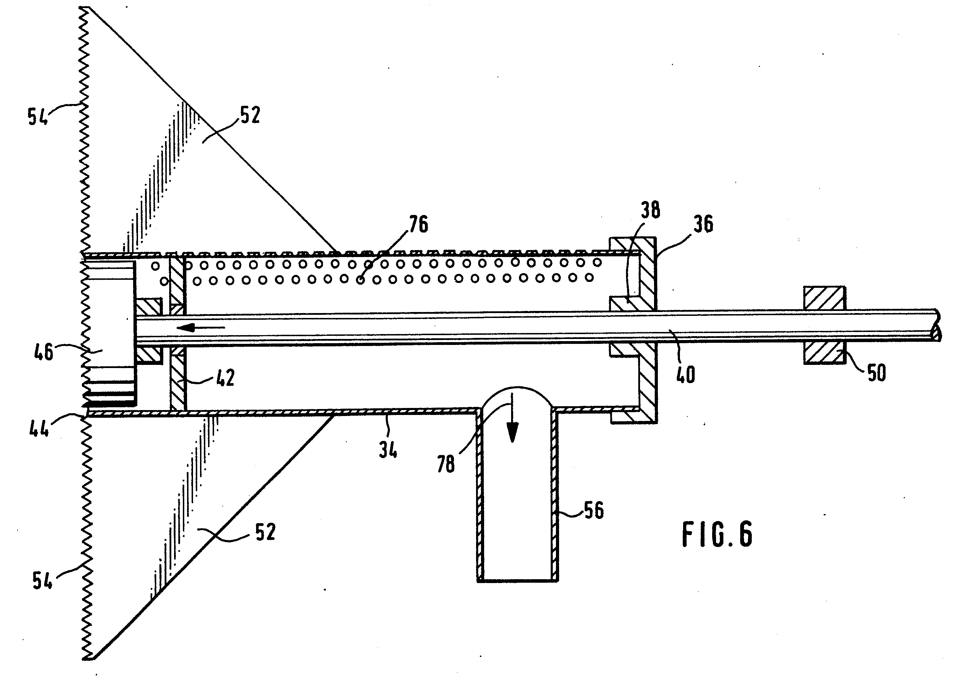

In den Figuren 5 und 6 ist das Gerät zur Herstellung der
Bohrungen 32 dargestellt. Das Gerät weist ein zylindrisches
Rohr 34, dessen rückwärtiges Ende 36 verschlossen ist und
ein Drehlager 38 für eine Bohrwelle 40 enthält, auf. Ein
zweites Drehlager 42 für die Bohrwelle 40 ist etwas innerhalb des vorderen Endes 44 des Rohrs 34 vorgesehen. Innerhalb der beiden Drehlager 38 und 42 ist die Bohrwelle 40
in axialer Richtung verschiebbar.

Am vorderen Ende der Bohrwelle 40 sitzt eine Frässcheibe
46, die in der in Figur 6 gezeigten Außerbetriebsstellung
mit Spiel in das vordere Ende 44 des Rohrs 34 aufgenommen
ist.

Am rückwärtigen Ende geht die Bohrwelle 40 in die nicht
gezeigte Abtriebswelle eines Elektromotors 48 über. Die
Bohrwelle 40 trägt nahe dem Elektromotor 48 einen radial
abstehenden Anschlag 50, der in der in Figur 5 gezeigten,
am weitesten aus dem Rohr 34 ausgefahrenen Stellung der
Frässcheibe 46 am geschlossenen rückwärtigen Ende 36 des
Rohrs 34 zur Anlage kommt.

An der Außenseite des Rohrs 34 sind nahe dessen vorderem
Ende 44 vier radial abstehende, in Seitenansicht etwa dreieckige Flügel 52 befestigt, von denen in Figur 5 und 6
jeweils nur zwei sichtbar sind. Die vier Flügel sind in
Umfangsrichtung des Rohrs 34 jeweils um 90 Grad gegeneinander
versetzt. Ihre Vorderkante 54 fluchtet mit dem vorderen Ende
44 des Rohrs 34. Beim Ansetzen des Rohrs 34 an der Außenseite der Wandung 14' ist dadurch gewährleistet, daß das
Rohr 34 genau senkrecht zu dieser Außenfläche steht. Die
in den Steg 24' eindringende Frässcheibe 46 bewegt sich
dadurch genau in Längsrichtung des Steges 24'.

Das Rohr 34 weist in seinem rückwärtigen Bereich einen als
Handgriff zur Führung des Rohrs ausgebildeten Absaugstutzen
56 auf, der an einen Schlauch 58 angeschlossen ist. Das
andere Ende des Schlauches ist an eine Absaugpumpe 60 angeschlossen, die auf der Außenseite des Deckels 62 eines
Fräsgutbehälters 64 derart befestigt ist, daß durch den
Schlauch 58 abgesaugtes Fräsgut 66 sich im Inneren eines
in den Fräsgutbehälter 64 eingehängten Kunststoffsackes 68
sammelt. Der Rand 70 des Kunststoffsackes 68 ist mittels
einer Klemmeinrichtung 71 am Rand des Deckels 62 lösbar
eingeklemmt. Der Deckel 62 kann abgenommen und zu Transportzwecken in umgekehrter Lage mit der Innenseite nach
außen auf den Fräsgutbehälter 64 dicht aufgesetzt werden.
In diesem Falle wird vor dem Aufsetzen des Deckels 62 das
Rohr 34 mit dem Elektromotor 48 sowie der Schlauch 58 ins
Innere des Fräsgutbehälters 64 eingelegt und das Absauggebläse 60 befindet sich ohnehin durch das Umkehren des
Deckels im Inneren des Fräsgutbehälters. Für den Transport
ist daher das gesamte Gerät im Fräsgutbehälter 64 sicher
untergebracht. Der Elektromotor 48 weist ebenfalls einen
Handgriff 72 auf, so daß während des Bohrens das Gerät an
den Handgriffen 56 und 72 gehalten werden kann. In üblicher
Weise ist aus dem Handgriff 72 ein elektrisches Anschlußkabel 74 herausgeführt.

Damit das von der Frässcheibe 46 ausgefräste Fräsgut einwandfrei in den Absaugstutzen 56 geleitet wird, weist das Rohr 34
in dem dem Absaugstutzen 56 gegenüberliegenden Bereich zahlreiche kleine Luftansaugöffnungen 76 auf, so daß eine allseitige Luftströmung im Rohr 34 zum Absaugstutzen 56 hin
gemäß dem Pfeil 78 erzeugt wird, die das Fräsgut durch das
Rohr 34 in den Absaugstutzen 56 leitet.

93

Dipl. Ing. Klaus Westphal

Dr. rer. nat. Bernd Mussgnug

Dr. rer. nat. Otto Buchner

PATENTANWÄLTE

Seb.-Kneipp-Strasse 14

D-7730 VS-VILLINGEN

Flossmannstrasse 30 a

D-8000 MÜNCHEN 60

Telefon 07721 - 55343
Telegr. Westbuch Villingen
Telex 513772 webu d

Telefon 089 - 832446
Telegr. Westbuch München
Telex 5213177 webu d

00071992

PATENTANSPRÜCHE

1. Bauelement aus geschäumtem Polystyrol, dadurch gekennzeichnet, daß es ein die Schaumstoffperlen durchgehend
überziehendes und/oder in Hohlräumen (26,32) des Bauelements (10,10') eingebrachtes Brandschutzmittel (28,28')
enthält.

2. Bauelement nach Anspruch 1, dadurch gekennzeichnet, daß
das Brandschutzmittel (28,28') flüssig oder pulverförmig
ausgebildet und in Beuteln in die Hohlräume (26,32) eingebracht ist.

3. Bauelement nach Anspruch 1 oder 2, welches als Beton-
Schalungselement (10,10') mit zwei parallele Wandungen
(12,14;12',14') verbindenden Stegen (24,24') ausgebildet
ist, dadurch gekennzeichnet, daß das Brandschutzmittel
(28,28') in Ausnehmungen (26,32) der Stege (24,24') angebracht ist.

4. Bauelement nach Anspruch 3, dadurch gekennzeichnet, daß
das Brandschutzmittel (28') in Axialbohrungen (32) der
Stege (24') angeordnet ist, die eine (14') der parallelen
Wandungen (12',14') durchsetzen.

Postscheckkonto: Karlsruhe 76979-754   Bankkonto: Deutsche Bank AG Villingen (BLZ 69470039) 146332

0071992

5.  Gerät zum Anbringen der Axialbohrungen (32) nach Anspruch 4, gekennzeichnet durch ein an die Außenseite
    der einen Wandung (14') stirnseitig ansetzbares Rohr
    (34), in welchem ein durch einen Elektromotor (48) angetriebener Fräsbohrer (40,46) drehbar und axial verschiebbar gelagert ist.

6.  Gerät nach Anspruch 5, gekennzeichnet durch einen am
    Rohr (34) angebrachten Absaugstutzen (56), der über
    einen Schlauch (58) mit einem in einen Fräsgutbehälter
    (64) fördernden Absauggebläse (60) verbunden ist.

7.  Gerät nach Anspruch 5 oder 6, dadurch gekennzeichnet, daß
    der Fräsbohrer eine Frässcheibe (46) aufweist, die an
    einer mit dem Elektromotor (48) verbundenen Bohrwelle
    (40) sitzt, und daß die Bohrwelle (40) aus dem geschlossenen
    rückwärtigen Ende (36) des Rohrs (34) nach außen geführt
    ist und außerhalb des Rohrs (34) einen die axiale Verschiebung der Bohrwelle (40) im Rohr (34) durch Anlage
    am geschlossenen Rohrende (36) begrenzenden Anschlag
    (50) trägt.

8.  Gerät nach einem der Ansprüche 5 bis 7, dadurch gekennzeichnet, daß das Rohr (34) an seinem vorderen Ende (44)
    wenigstens drei radial von seiner Außenfläche abstehende
    Flügel (52) trägt, deren Vorderkanten (54) bündig in
    einer gemeinsamen Ebene senkrecht zur Rohrachse liegen,
    wobei das Rohr (34) nicht über diese Ebene vorsteht.

9.  Gerät nach einem der Ansprüche 6 bis 8, dadurch gekennzeichnet, daß das Rohr (34) von einer Anzahl von Luftansaugöffnungen (76) durchsetzt ist.

10. Gerät nach Anspruch 9, dadurch gekennzeichnet, daß die Luftansaugöffnungen (76) wenigstens vorwiegend auf der dem Absaugstutzen (56) gegenüberliegenden Seite des Rohrs (34) angeordnet sind.

11. Gerät nach einem der Ansprüche 6 bis 10, dadurch gekennzeichnet, daß der Fräsgutbehälter (64) durch einen Deckel (62) verschließbar ist, auf dessen Außenseite das Absauggebläse (60) fest montiert ist, der an seinem Rand eine Klemmeinrichtung (71) für einen dem Inneren des Fräsgutbehälters (64) anliegenden Kunststoffsack (68) aufweist und der mit seiner Außenseite sowohl nach außen als auch nach innen weisend auf den Fräsgutbehälter (64) fest aufsetzbar ist, wobei der Fräsgutbehälter (64) zur Aufnahme des Absauggebläses (60), des Schlauches (58), des Elektromotors (48) und des Rohrs (34) geeignet ist.

0071992

FIG.1

FIG.2

FIG.3

FIG.4

FIG.5

54  52  76  38  36  46  42  40  50  44  34  78  56

FIG.6

0071992

| | Europäisches Patentamt | **EUROPÄISCHER RECHERCHENBERICHT** | 0071992 Nummer der Anmeldung |
| --- | --- | --- | --- |

EP  82 10 7105

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
| --- | --- | --- | --- |
| | --- | | E 04 B 1/94 |
| X,Y | DE-A-2 352 969 (BASF AG) * Gesamtes Dokument * | 1,2 | E 04 B 2/86 B 23 B 45/00 B 28 D 7/02 |
| | --- | | B 29 C 17/10 |
| X,Y | CH-A- 485 084 (BASF AG) * Gesamtes Dokument * | 1,2 | |
| | --- | | |
| Y | DE-A-2 614 893 (MABAG LUFT- UND KLIMATECHNIK GMBH) * Seite 3, Absatz 2 * | 2 | |
| | --- | | |
| A | DE-U-7 404 896 (G.PEIS) * Gesamtes Dokument * | 5,6,8 | |
| | --- | | |
| A | DE-A-2 453 791 (B. JOHANSSON) * Gesamtes Dokument * | 5,6,9, 10 | |
| | --- | | RECHERCHIERTE SACHGEBIETE (Int. Cl. 3) |
| A | DE-A-1 963 328 (ROHER-BOHM LTD.) * Gesamtes Dokument * | | E 04 B 1/00 E 04 B 2/00 B 23 B 45/00 B 28 D 7/00 B 29 C 17/00 |
| | ----- | | |

Der vorliegende Recherchenbericht wurde für alle Patentansprüche erstellt.

| Recherchenort | Abschlußdatum der Recherche | Prüfer |
| --- | --- | --- |
| BERLIN | 23-09-1982 | KRABEL A.W.G. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82